(19) Europäisches Patentamt
European Patent Office
Office européen des brevets

(11) Veröffentlichungsnummer: **0 212 169 B1**

# (12) EUROPÄISCHE PATENTSCHRIFT

(45) Veröffentlichungstag der Patentschrift: **19.09.90**

(51) Int. Cl.⁵: **G02B 6/44**, H01B 7/28

(21) Anmeldenummer: **86109025.6**

(22) Anmeldetag: **02.07.86**

(54) **Füllmasse für Lichtwellenleiteradern und/oder Lichtwellenleiterkabel.**

(30) Priorität: **05.07.85 DE 3524166**

(43) Veröffentlichungstag der Anmeldung: **04.03.87 Patentblatt 87/10**

(45) Bekanntmachung des Hinweises auf die Patenterteilung: **19.09.90 Patentblatt 90/38**

(84) Benannte Vertragsstaaten: **AT BE CH DE FR GB IT LI NL SE**

(56) Entgegenhaltungen:
**EP-A- 0 067 009**
**US-A- 3 888 710**
**US-A- 3 893 962**
**US-A- 4 351 913**
**US-A- 4 366 075**

(73) Patentinhaber: **Siemens Aktiengesellschaft, Wittelsbacherplatz 2, D-8000 München 2(DE)**

(72) Erfinder: **Lange, Gerhard, Dipl.-Chem., Ursbergerstrasse 13, D-8000 München 80(DE)**
Erfinder: **Weil, Erich, Dr. Dipl.-Chem., Damaschkestrasse 90, D-8000 München 82(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 212 169 B1

ACTORUM AG

## Beschreibung

Die Erfindung betrifft eine Füllmasse für Lichtwellenleiteradern und/oder Lichtwellenleiterkabel.

Aus der US-PS 4331 379 ist eine Füllmasse für Lichtwellenleiteradern bekannt, bei der thixotropierte Öle eingesetzt werden. Es handelt sich dabei um eine Mischung.

An Füllmassen für Lichtwellenleiter-Übertragungselemente werden Forderungen gestellt, die sich teilweise widersprechend und in ihrer Gesamtheit bisher nicht ausreichend befriedigend erfüllt werden konnten. Im einzelnen sollte eine derartige Füllmasse im wesentlichen folgende Eigenschaften aufweisen:

a) Beibehaltung der Eigenschaften in einem weiten Temperaturbereich z.B. von -40°C bis 70°C, wobei weder durch zu starke Erhöhung der Viskosität eine mechanische Beanspruchung der Lichtwellenleiter auftreten noch (bei höheren Temperaturen) eine Separation der flüssigen von der festen Phase (Austropfen) eintreten soll,

b) bei Raumtemperatur geringe Viskosität der Füllmasse im unverarbeiteten Zustand, um das Fördern durch Rohre mit geringem Innendurchmesser und kleinem Überdruck zu ermöglichen,

c) die Substanz soll den Aufbau von Zug- oder Druckkräften bei den Lichtwellenleiteradern möglichst weitgehend vermeiden, weil dadurch deren Dämpfung ansteigen würde,

d) möglichst geringe Feuchteaufnahme,

e) Nichtaggressivität gegen kontaktierte Werkstoffe insbesondere gegenüber der Beschichtung des Lichtwellenleiters (Fasercoating),

f) Alterungsbeständigkeit in chemischer und physikalischer Hinsicht.

Es ist bekannt, daß Kieselsäure-Substanzen auf ihrer Oberfläche Silanol-Gruppen aufweisen, welche das Bestreben haben, über schwache Wasserstoffbrückenbindungen mit der Matrix in Wechselwirkung zu treten. Bei Verwendung thixotropierter Öle als Füllmassen ist festzustellen, daß infolge der schwachen Wasserstoffbrückenbildung diese schon bei geringer Energieeinwirkung wieder getrennt wird. Dadurch erfolgt eine starke Viskositätsabnahme. Die Trennung zwischen der flüssigen Phase (Öl) und der festen Phase (Füllstoffe) wird noch verstärkt durch die Kapillarkräfte in der Ader. Dadurch tropft die flüssige Phase leicht aus. Gleichzeitig übt der verbleibende angereicherte Füllstoff einen Druck auf die Lichtwellenleiterfaser aus, wodurch es zu einem Anstieg der Dämpfung kommen kann. Vor allem die einander widersprechenden Forderungen, nämlich einerseits feste Konsistenz, um das Austropfen zu verhindern und andererseits möglichst weiche, d.h. niederviskose Eigenschaften der Füllmasse, um die mechanische Beanspruchung der Lichtwellenleiter und damit den Dämpfungsanstieg klein zu halten, sind bisher nicht befriedigend gelöst worden.

Aus der US-A-3 893 962 geht bereits die Verwendung einer Mischung eines flüssigen Polyolefins (Polybuten) und fein verteiltem Siliciumdioxyd als Füllmasse für Telefonkabel hervor. Die bekannte Mischung enthält noch weitere Komponenten, darunter jedoch keine multifunktionelle Silanverbindung.

Der vorliegenden Erfindung liegt die Aufgabe zugrunde, eine Füllmasse zu schaffen, welche die vorstehend genannten Anforderungen erfüllt und aber zugleich noch leicht zu verarbeiten ist. Gemäß der Erfindung wird diese Aufgabe bei einer Füllmasse der eingangs genannten Art dadurch gelöst, daß diese hergestellt wird durch chemische Reaktion folgender Ausgangsstoffe: zwischen 63 und 99 Gewichtsprozent Polyglykol und/oder flüssiges Polyolefin, zwischen 27 und 0,5 Gewichtsprozent feinverteiltes Siliziumdioxid als Füllstoff und zwischen 10 und 0,5 Gewichtsprozent einer multifunktionellen Silanverbindung der Formel:

$$\begin{array}{ccc} & R_3 & \\ & | & \\ R_2 - & Si & - OR_1 \\ & | & \\ & OR_1 & \end{array}$$

worin $R_1$ eine Alkylgruppe mit 1 bis 3 Kohlenstoffatomen bedeutet, $R_2$ eine Alkylgruppe mit 1 bis 3 Kohlenstoffatomen oder die Gruppe $-OR_1$, und $R_3$ eine Vinyl- oder Epoxygruppe oder eine mit Mercapto-, Methaenyloxy-, Cyano-, Amino- oder Carboxygruppen substituierte Alkylgruppe mit 2 bis 4 Kohlenstoffatomen bedeutet.

Unter Methaenyloxygruppen sind Verbindungen zu verstehen, welche die Struktur

$$\begin{array}{c} CH_2 = \underset{\substack{| \\ O \\ |}}{C} - CH_3 \end{array}$$

aufweisen.

Bezüglich der vorstehend mit a) und b) bezeichneten Anforderungen ergibt der Einsatz einer multifunktionellen Silanverbindung deshalb einen erheblichen Fortschritt, weil diese Vernetzung/Kopplung zwischen der Matrix (Polyglykol bzw. Polyolefin) und der Füllstoffoberfläche (d.h. deren Silangruppen) herbeiführt. Es entsteht eine Gerüststruktur, die eine Separation der flüssigen Phase unmöglich macht und gleichzeitig eine stabile Gelbindung bewirkt. Das Polyglykol bzw. Polyolefin ist im Überschuß vorhanden, d.h. auch nach der Reaktion aller Silankomponenten (wodurch eine tragende Gerüststruktur entsteht) bleibt ein Überschuß vorhanden, der die Eigenschaften der Füllmasse mitbestimmt.

Die erfindungsgemäße Füllmasse zeichnet sich auch durch eine besonders leichte Förderbarkeit (Anforderung b) durch teilweise zeitlich verzögerte Re-Gelierung aus, so daß sie beispielsweise durch Röhren zwischen 0,5 und 5 mm Innendurchmesser gefördert werden kann und ein Überdruck von nur wenigen Bar hierfür benötigt wird. Das Arbeiten mit geringen Überdrucken hat den Vorteil, daß es bei der Füllung der Lichtwellenleiterader zu keinen unerwünschten mechanischen Beanspruchungen der Lichtwellenleiterfasern kommt.

Ein weiterer Vorzug der erfindungsgemäßen Substanz (Punkt c) besteht darin, daß mit Hilfe des hochdispersen $S_iO_2$ eine besonders zeitstabile Verbindung bewirkt werden kann. Die verwendete Füllstoffmenge des Siliziumdioxids beträgt 27 bis 0,5 Gewichtsprozent, vorzugsweise 2 Gewichtsprozent, bezogen auf das Gesamtgewicht der Aderfüllmasse. Feinverteiltes Siliziumdioxid liegt im wesentlichen dann vor, wenn die Agglomerate unter 10 µm groß sind. Normales Siliziumdioxid ist von Haus aus hydrophil.

Besonders vorteilhafte Ergebnisse lassen sich erzielen, wenn durch Verwendung hydrophobisierten Siliziumdioxids die Oberflächenspannung so verändert wird, daß zusammen mit der vorstehend erwähnten Gerüststruktur auch unter extremen Bedingungen und für lange Zeit die Gelphase fixiert bleibt und nicht austropft. Eine vorteilhafte Weiterbildung der Erfindung sieht deshalb vor, sowohl hydrophobisiertes als auch hydrophiles Siliziumdioxid zu verwenden. Letztere ergibt eine verbesserte Möglichkeit, die flüssige Phase (Matrix) über eine chemische Reaktion an die Kieselsäure zu binden.

Die erfindungsgemäße Füllmasse nimmt bereits von Haus aus wenig Feuchtigkeit auf (Punkt d), weil sowohl das Polyglykol bzw. das Polyolefin als auch die aliphatische Struktur der Kopplungskomponente (Silan-Verbindung) weitgehend wasserabstoßend sind.

Diese Eigenschaft kann gemäß einer vorteilhaften Weiterbildung der Erfindung noch dadurch gesteigert werden, daß ein Anteil eines hydrophobisierten Siliziumdioxids der Füllmasse zuzusetzen ist und zwar deswegen, weil durch deren Eigenschaft jegliche Feuchtigkeitsaufnahme verhindert wird.

Die erfindungsgemäß aufgebaute Füllmasse hat den besonderen Vorteil, daß sie gegenüber den allgemein verwendeten Faserbeschichtungen (Fasercoating) aus Polyurethanakrylaten keinerlei Aggressivität zeigt (Punkt e). Derartige Beschichtungen aus PU-Akrylat werden deshalb bei Lichtwellenleitern besonders häufig verwendet, weil sie US-härtend sind und hohe Fertigungsgeschwindigkeiten gewährleisten.

Ein weiterer Vorteil der gemäß der Erfindung aufgebauten Füllmasse ist im übrigen auch darin zu sehen, daß diese eine ausgezeichnete Transparenz aufweist. Dies gilt insbesondere dann, wenn als Polyglykol das Polypropylenglykol verwendet wird, welches eine fast dem Glas entsprechende Durchsichtigkeit liefert. Eine derartige Eigenschaft ist wichtig beispielsweise für die Identifizierung von eingefärbten Lichtwellenleiteradern von außen. Polypropylenglykol ist auch deshalb besonders vorteilhaft, weil es von Haus aus gute Viskositätswerte und einen niedrigen Stockpunkt (Einfrierpunkt<- 50°C) hat. Es ist darüberhinaus wasserlöslich, neutral gegen die Aderhüllen (z. B. aus Polyamid) und die z.B. aus PUR-Acrylate bestehende Faserbeschichtung (Fasercoating).

Alle Polyglykole weisen Äthergruppen und alkoholische Endgruppen auf, die chemische Reaktionen (Verknüpfungen) beispielsweise mit Vinyl-, Epoxygruppen usw. der Silanverbindungen ermöglichen. Diese Polyglykole zeigen keine Wechselwirkung mit dem Coating sowie Hohladerwerkstoffen (Punkt e).

Neben den oben erwähnten Vinyl-, Epoxigruppen dgl. besitzt die Silanverbindung Alkoxygruppen, die mit der Füllstoffoberfläche (d.h. der feinverteilten Kieselsäure) in Reaktion treten.

(1)

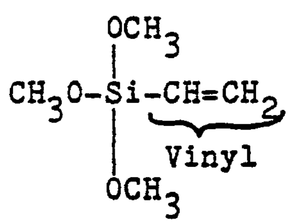

Da aus sterischen Gründen nicht alle -Si-OR$_1$ Gruppen mit $R_1 \triangleq CH_3$) unter Ausbildung einer festen Bindung zum Füllstoff abreagieren, erfolgt daneben auch eine Quervernetzung der Haftvermittler-Moleküle etwa durch $H_2O$-Abspaltung:

(2) 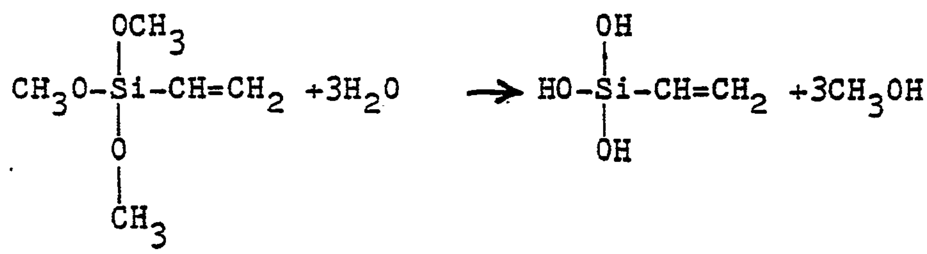

Daraus resultiert über zwei durch Hydrolyse entstandenen Si-OH Gruppen unter Aufbau einer Siloxan-Bindung:

(3) 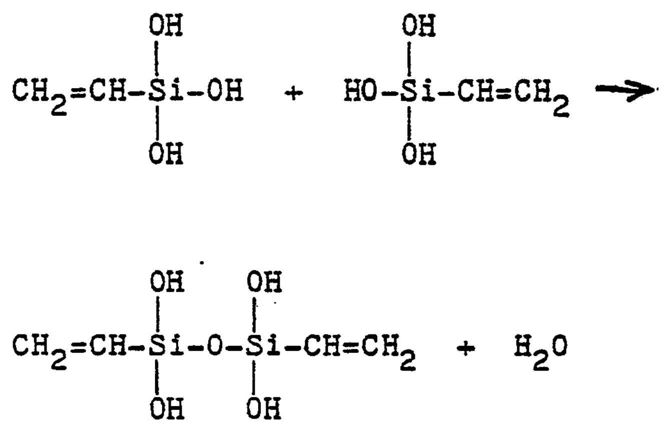

Die freien Si-OH Gruppen zwischen benachbarten Partikeln können zusätzlich Wasserstoffbrücken-Bindungen zum anorganischen Substrat in der Grenzschicht aufbauen, die bei mechanischen Belastungen reversibel gespalten werden und bei Beendigung des Belastzustandes sich erneut formieren (Re-Gelieren). Es ergibt sich dabei etwa folgende Struktur:

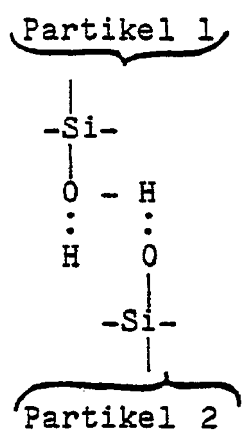


Die bei der erfindungsgemäßen Füllmasse verwendbaren Silanderivate sind niedrig-dialkyl- oder niedrig-trialkoxy-silane, die vorzugsweise in der Alkylgruppe einen gegenüber den benachbarten C-Atomen der Äthergruppne bzw. den alkoholischen Endgruppen des Polyglykols reaktionsfähigen Vinyl- oder Epoxysubstituenten tragen.

Geeignete Silanderivate haben die nachfolgende allgemeine Formel:

(4) 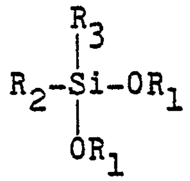

worin $R_1$ eine Alkylgruppe mit 1 bis 3 Kohlenstoffatomen bedeutet, $R_2$ eine Alkylgruppe mit 1 bis 3 Kohlenstoffatomen oder die Gruppe $-OR_1$, und $R_3$ eine Vinyl- oder Epoxygruppe oder eine mit Mercapto-, Methaenyloxy-, Cyano-, Amino- oder Carboxygruppen substituierte Alkylgruppe mit 2 bis 4 Kohlenstoffatomen bedeutet.

Der Erfindung liegen wahrscheinlich folgende Reaktionsmechanismen zugrunde, die einen systematischen, chemischen Aufbau der Füllmasse ermöglichen und somit eine exakte Anpassung an die eingangs aufgeführten Bedingungen gestatten.

Die Schemaerläuterung ist der Übersicht halber nur an einem Vinylsilan dargestellt.

(5) 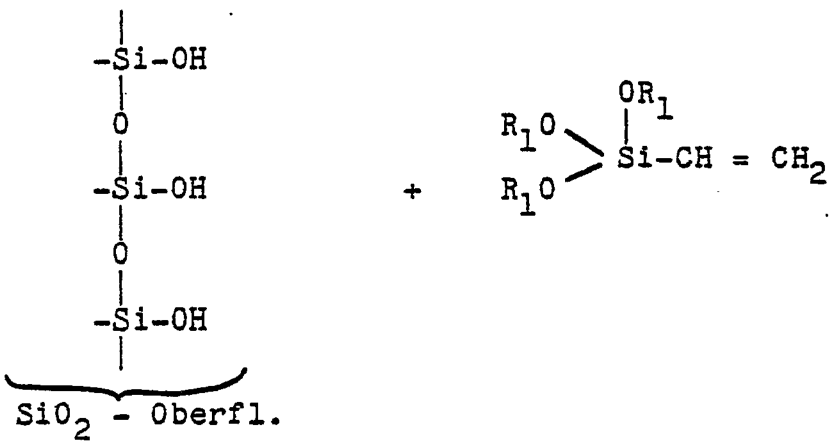

ergibt über eine Zwischenstufe nach Formel (3)

(6) 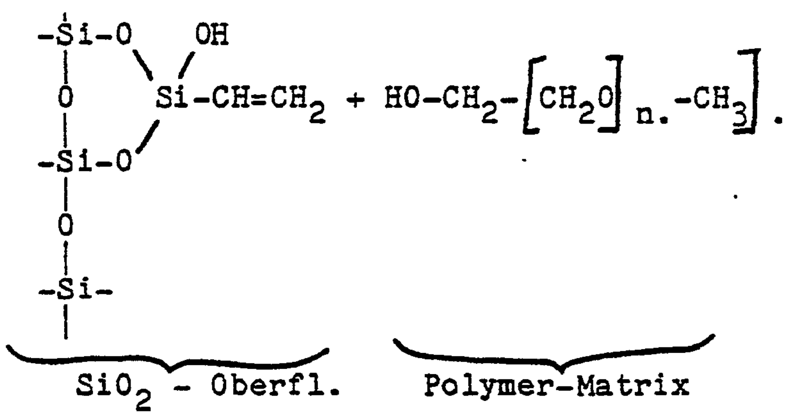

Anschließend an (6) reagieren beide Komponenten unter Zufuhr von Wärme (ca. 120° bis 170°C in Minuten bis Stunden) wie folgt:

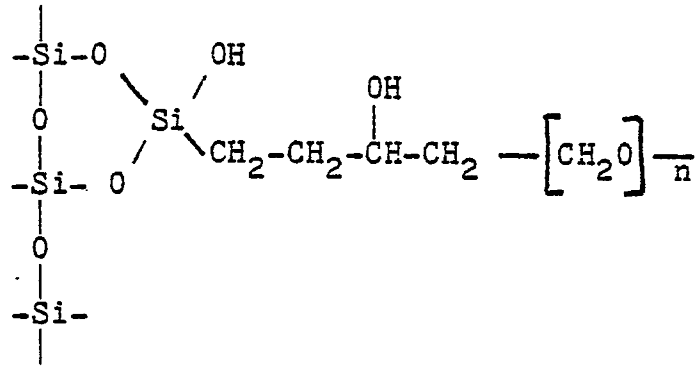

Damit ist eine erfindungsgemäße Füllmasse mit den gewünschten Eigenschaften aufgebaut. Um die Reaktion zu beschleunigen und um bei niedrigeren Temperaturen arbeiten zu können, ist es zweckmäßig, Radikalbildner einzusetzen:

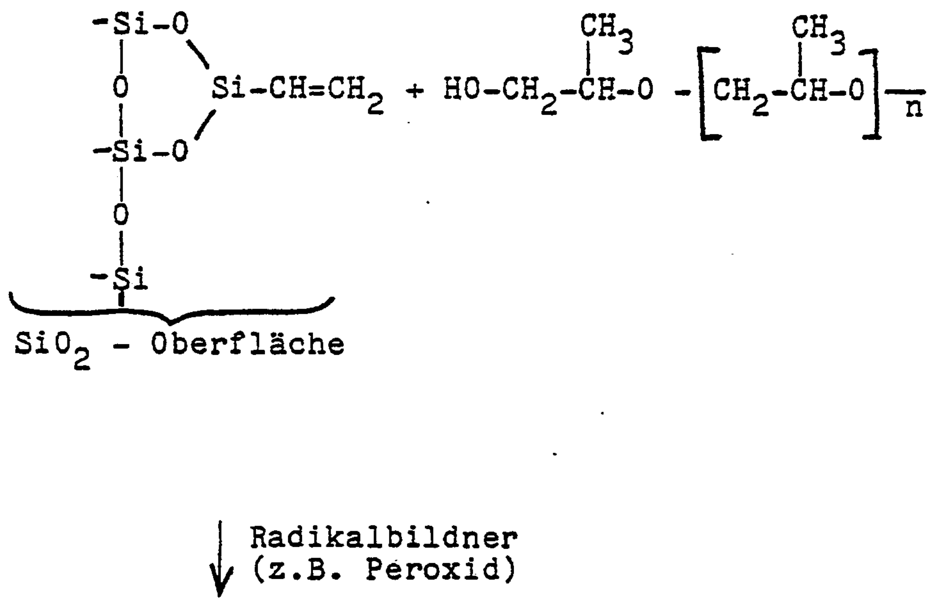

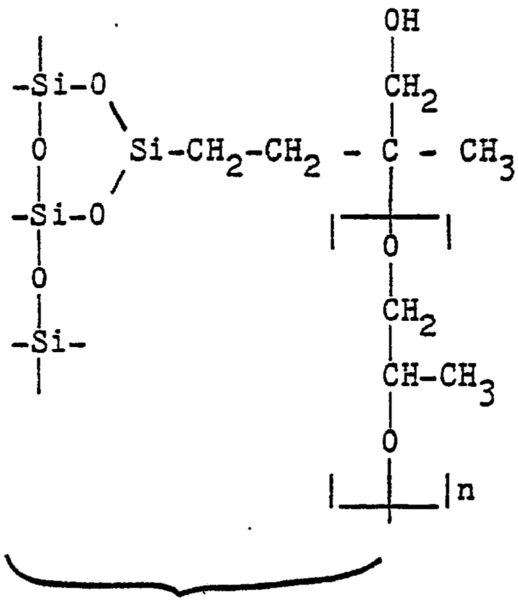

$SiO_2$ - Oberfläche

Nachfolgend wird noch eine Reaktion dargestellt, welche mit Epoxidsilanen arbeitet:

Beispiel: Alkoxyepoxidsilane

Die Reaktion von $SiO_2$ und der Alkoxygruppe verläuft wie unter (3) dargestellt.
Die Reaktion der Epoxidgruppe mit dem Polyglykol erfolgt nach folgendem an einem Epoxysilan dargestellten Schema:

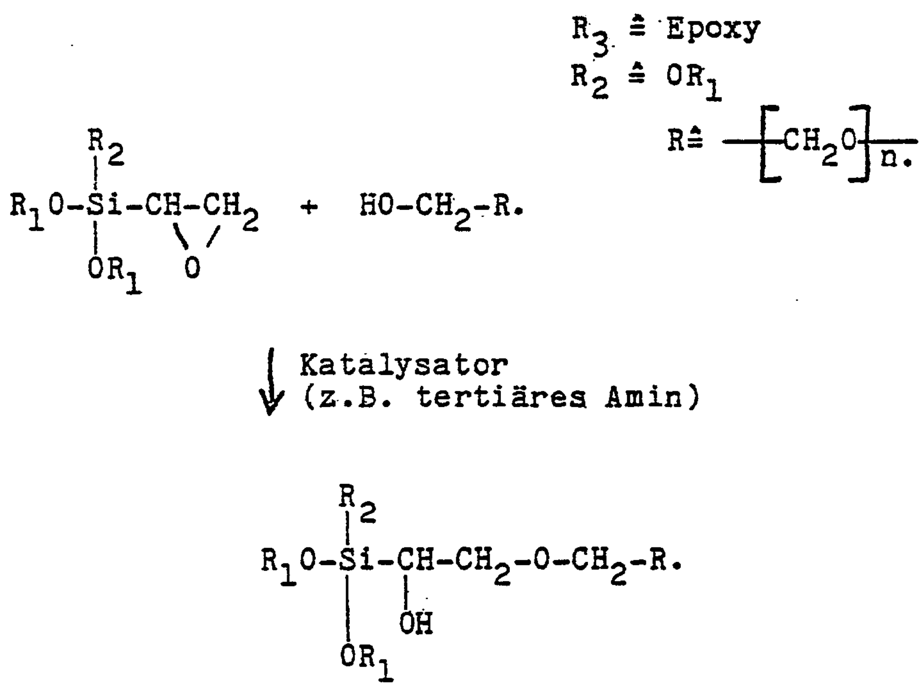


Die verwendete Silanmenge beträgt 10 bis 0,5 Gewichtsprozent, vorzugsweise um 0.7 Gewichtsprozent, bezogen auf das Gesamtgewicht der Aderfüllmasse.
Bei Verwendung von Epoxysilan benötigt man einen aminischen Katalysator, wobei dessen Menge zwischen 0.2 bis 0.5 Gewichtsprozent liegt.

Bei Anwendung von Epoxidsilanen lassen sich neben linearen sogar räumliche Vernetzungen bewirken, wenn als zusätzliche Substanz ein monomeres Diol (z.B. Ethylenglykol) verwendet wird, und zwar zwischen 1 und 10 Gewichtsprozent vorzugsweise um 3 Gewichtsprozent.

Um einen eventuellen ungünstigen Einfluß von Sauerstoff (insbesondere Luftsauerstoff) auf das in der Substanz enthaltene Polyglkyol und/oder das Verdickungsmittel vorzubeugen, wird zweckmäßiberweise eine Zugabe eines Antioxidans vorgesehen. Als Antioxidantien, die sich in Polyglykolen gut lösen, haben sich beispielsweise folgende Substanzen bewährt:
polymeres 2,2,4-Trimethyl-1, 2-dihydrochinolin Phenothiazin
Octadecyl 3-(3,5-di-tert.butyl-4-hydroxyphenyl)-propionat
Hydrochinon-monomethylether

Benötigt werden hiervon zusätzlich 0.1 bis 0.5 Gew.-% bezogen auf die eigentliche Füllmasse. Sie nehmen an der Reaktion nicht teil und sind nur in physikalischer Mischung vorhanden.

Für Aderfüllmassen sind folgende Anteile der Ausgangsstoffe besonders zweckmäßig:

| | | |
|---|---|---|
| Polyglykol oder Polyolefin | 94 bis 99 | Gew.-% |
| vorzugsweise | 96 bis 98 | " |
| Siliziumdioxid | 4 bis 0,5 | " |
| vorzugsweise | 3 bis 1,5 | " |
| Silan | 2 bis 0,5 | " |
| vorzugsweise | 1 bis 0,5 | " |

Für Seelenfüllmassen sind folgende Zusammensetzungen der Ausgangsstoffe besonders zweckmäßig:

| | | |
|---|---|---|
| Polyglykol oder Polyolefin | 78 bis 95,5 | Gew.-% |
| vorzugsweise | 90 bis 94,5 | " |
| Siliziumdioxid | 20 bis 4 | " |
| vorzugsweise | 9 bis 5 | " |
| Silan | 2 bis 0,5 | " |
| vorzugsweise | 1 bis 0,5 | " |

Nachfolgend sind vorteilhafte Ausführungsbeispiele für die Zusammensetzung der erfindungsgemäßen Füllmasse ausgehend von Polyglykolen angegeben. Dabei beziehen sich die Beispiele 1 mit 3 auf Aderfüllmassen (vgl. Fig. 1), während die Beispiele 4 mit 6 Seelenfüllmassen betreffen (vgl. Fig. 2). Aderfüllmassen sollen welcher sein als Seelenfüllmassen. Je höher der Anteil des Polyglykols ist, (und je geringer der Anteil des Siliziumdioxids), desto weicher wird die Substanz und umgekehrt.

Beispiel 1 Es wird Aderfüllmasse hergestellt, die folgende Bestandteile enthält:

| Komponente | Gew.-% |
|---|---|
| Polypropylenglykol (z.B. "B01/300" der Fa. Hoechst) | 97 |
| Siliziumdioxid (z.B. "Aerosil 380" der Fa. Degussa) | 2 |
| Vinyl-trialkoxy-silan (z.B. "GF56" der Fa. Wacker Chemie) | 0.7 |
| Antioxidantien (z.B. "Irganox 1076" der Fa.Ciba Geigy) | 0.3 |

Die Masse wird in einer Kugelmühle bei etwa 120°C gut vermischt. Sobald eine einheitliche Mischung erzielt ist, wird die Masse aus der Mühle genommen, auf Zimmertemperatur abgekühlt und entlüftet. Die Reaktion erfolgt bei 120°C in der Kugelmühle in etwa 10 bis 20 min.

Beispiel 2 Nach der Arbeitsweise von Beispiel 1 wird eine Aderfüllmasse hergestellt, welche folgende Bestandteile enthält:

| Komponente | Gew.-% |
|---|---|
| Polypropylenglykol (z.B. "B01/300" der Fa. Hoechst) | 97 |
| hydrophiles Siliziumdioxid (z.B. "Aerosil 380" der Fa. Degussa) | 0.5 |
| hydrophobes Siliziumdioxid (z.B. "HDK 20" der Fa. Wacker Chemie) | 1.5 |
| Vinyl-trialkoxy-silan (z.B. "GF56" der Fa. Wacker Chemie) | 0.7 |
| Antioxidantien (z.B. "Irganox 1076" der Fa.Ciba Geigy) | 0.3 |

Beispiel 3 Es wird eine Aderfüllmasse hergestellt, welche folgende Bestandteile enthält:

| Komponente | Gew.-% |
|---|---|
| Polypropylenglykol | 96.1 |
| hydrophiles Siliziumdioxid | 1 |
| hydrophobes Siliziumdioxid | 1 |
| Epoxy-trialkoxy-silan (z.B. "A 187" der Fa. Union Carbide) | 1 |
| aminischer Katalysator (z.B. "DMP 30" der Fa. Bakelite GmbH) | 0.5 |
| Antioxidantien | 0.4 |

Beispiel 4 Es wird eine Seelenfüllmasse hergestellt, die folgende Bestandteile enthält:

| Komponente | Gew.-% |
|---|---|
| Polypropylenglykol | 77,5 |
| hydrophiles Siliziumdioxid | 1,5 |
| hydrophobes Siliziumdioxid | 20 |
| Vinyl-trialkoxy-silan | 0.6 |
| Antioxidantien | 0.4 |

Die Komponenten werden erst verrührt und anschließend auf einem heißen Zweiwalzen-Mischer bei 120°C homogen gemischt.

Beispiel 5 Nach der Arbeitsweise von Beispiel 4 wird eine Seelenfüllmasse hergestellt, welche folgende Bestandteile enthält:

| Komponente | Gew.-% |
|---|---|
| Polypropylenglykol | 81,8 |
| hydrophiles Siliziumdioxid | 1.5 |
| hydrophobes Siliziumdioxid | 15 |
| Epoxy-trialkoxy-silan | 1 |
| aminischer Katalysator | 0.3 |
| Antioxidantien | 0.4 |

Die nachfolgenden Beispiele 6 und 7 betreffen Polyolefine als einen der Ausgangsstoffe:

Beispiel 6

Aderfüllmasse

| Komponente | Gew.-% |
|---|---|
| Polybuten | 95,7 |
| hydrophiles Siliziumdioxid | 1,5 |
| hydrophobes Siliziumdioxid | 1,5 |
| Vinyl-trialkoxy-silan | 0,9 |
| Antioxidantien | 0,4 |

Beispiel 7

Seelenfüllmasse

| Komponente | Gew.-% |
|---|---|
| Polybuten | 91.5 |
| hydrophiles Siliziumdioxid | 2 |
| hydrophobes Siliziumdioxid | 6 |
| Vinyl-trialkoxy-silan | 0,1 |
| Antioxidantien | 0,4 |

Die nachfolgenden Beispiele 8 und 9 betreffen Zusätze von monomerem Diol zur Erzielung einer räumlichen Vernetzung:

Beispiel 8

| Komponente | Gew.-% |
|---|---|
| Polypropylenglykol | 92,3 |
| Äthylenglykol (als Diol) | 3 |
| hydrophiles Siliziumdioxid | 1,5 |
| hydrophobes Siliziumdioxid | 1,5 |
| Epoxy-trialkoxy-silan | 1 |
| tertiäres Amin (Kat) | 0,3 |
| Antioxidantien | 0,4 |

Beispiel 9

Seelenfüllmasse

| Komponente | Gew.-% |
|---|---|
| Polypropylenglykol | 87,3 |
| Äthylenglykol (als Diol) | 3 |
| hydrophiles Siliziumdioxid | 2 |
| hydrophobes Siliziumdioxid | 6 |
| Epoxy-trialkoxy-silan | 1 |
| tertiäres Amin (Kat) | 0,3 |
| Antioxidantien | 0,4 |

In Fig. 1 ist eine gefüllte Lichtwellenleiterader GA im Querschnitt dargestellt. Sie enthält mindestens einen Lichtwellenleiter LW, der mit einer Beschichtung (coating) CT versehen ist. An diese schließt sich die Aderfüllmasse FM an, welche die vorstehend im einzelnen beschriebene Zusammensetzung hat. Außen ist eine Schutzhülle SH vorgesehen, welche aus einem extrudierten Kunststoff besteht. Die Füllmasse FC soll einerseits ausreichend weich sein, um beim Biegen eine mechanische Beanspruchung der Lichtwellenleiterfaser LW zu vermeiden und andererseits so stabil, daß ein Ausfließen oder Austropfen auch bei höheren Temperaturen unterbleibt (eingangs genannte Punkte a bis f).

In Fig. 2 sind drei Lichtwellenleiteradern GA1, GA2, GA3 (mit dem in Fig. 1 beschriebenen Aufbau) im Inneren eines Kabelmantels CS angeordnet. Die Seelenfüllmasse FCS dieser Anordnung weist die erfindungsgemäße Zusammensetzung auf. Es ist möglich, sowohl die Seelenfüllmasse FCS als auch die Aderfüllmasse FC aus den erfindungsgemäßen Ausgangsstoffen herzustellen. Es ist aber auch möglich, in einem Kabel nur eine erfindungsgemäße Seelenfüllmasse FCS und keine (oder eine andere) Aderfüllmasse FC vorzusehen oder umgekehrt.

Da hochdisperses Siliziumdioxid Raumnetze aus reinem $S_iO_2$ bildet, an deren äußeren Enden (sehr wenig) $H_2O$ angelagert sein kann, wird hierfür oft auch der Ausdruck "Kieselsäure" verwendet (vgl. RÖMPPS "Chemie Lexikon" 7. Auflage, 1973, Seite 66).

**Patentansprüche**

1. Füllmasse für Lichtwellenleiteradern (Aderfüllmasse) oder Lichtwellenleiterkabel (Seelenfüllmasse), hergestellt durch chemische Reaktion folgender Ausgangsstoffe: zwischen 63 und 99 Gewichtsprozent Polyglykol und/oder flüssiges Polyolefin, zwischen 27 und 0,5 Gewichtsprozent feinverteiltes Siliziumdioxid als Füllstoff und zwischen 10 und 0,5 Gewichtsprozent einer multifunktionellen Silanverbindung der Formel:

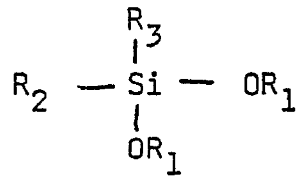

worin $R_1$ eine Alkylgruppe mit 1 bis 3 Kohlenstoffatomen bedeutet, $R_2$ eine Alkylgruppe mit 1 bis 3 Kohlenstoffatomen oder die Gruppe $-OR_1$, und $R_3$ eine Vinyl- oder Epoxygruppe oder eine mit Mercapto-, Methaenyloxy-, Cyano-, Amino- oder Carboxygruppen substituierte Alkylgruppe mit 2 bis 4 Kohlenstoffatomen bedeutet.

2. Füllmasse nach Anspruch 1, **dadurch gekennzeichnet**, daß für die Verwendung als Seelenfüllmasse (FCS) zwischen 78 und 95,5 Gewichtsprozent, vorzugsweise zwischen 90 und 94,5 Gewichtsprozent Polyglykol und/oder Polyolefin vorgesehen sind, daß als Füllstoff zwischen 20 und 4 Gewichtsprozent, vorzugsweise zwischen 9 und 5 Gewichtsprozent Siliziumdioxid vorgesehen sind und daß 2 bis 0,5 Gewichtsprozent, vorzugsweise 1 bis 0,5 Gewichtsprozent Silan vorgesehen sind.

3. Füllmasse nach Anspruch 1, **dadurch gekennzeichnet**, daß für die Verwendung als Aderfüllmasse (FC) zwischen 94 und 99 Gewichtsprozent, vorzugsweise zwischen 96 und 98 Gewichtsprozent Polyglykol und/oder Polyolefin vorgesehen sind, daß als Füllstoff zwischen 4 und 0,5 Gewichtsprozent, vorzugsweise zwischen 3 und 1,5 Gewichtsprozent Siliziumdioxid vorgesehen sind und daß 2 bis 0,5 Gewichtsprozent, vorzugsweise 1 bis 0,5 Gewichtsprozent Silan vorgesehen sind.

4. Füllmasse nach einem der vorhergehenden Ansprüche, **dadurch gekennzeichnet**, daß als Beschichtung (CT) des Lichtwellenleiters (LW) ein PUR-Akrylat verwendet ist.

5. Füllmasse nach einem der vorhergehenden Ansprüche, **dadurch gekennzeichnet**, daß als ein Teil des Siliziumdioxids ein hydrophobisiertes Siliziumdioxid verwendet ist.

6. Füllmasse nach einem der vorhergehenden Ansprüche, **dadurch gekennzeichnet**, daß die Füllmasse Zusätze von Antioxidantien, insbesondere zwischen 0,1 und 1 Gewichtsprozent der eigentlichen Füllmasse aufweist.

7. Füllmasse nach einem der vorhergehenden Ansprüche, **dadurch gekennzeichnet**, daß die Größe der Agglomerate des feinverteilten Siliziumdioxids unter 10µm gewählt ist.

8. Füllmasse nach einem der vorhergehenden Ansprüche, **dadurch gekennzeichnet**, daß eine mindestens eine Alkylgruppe aufweisende Silanverbindung verwendet ist.

9. Füllmasse nach einem der vorhergehenden Ansprüche, **dadurch gekennzeichnet**, daß eine mindestens eine Alkoxygruppe aufweisende Silanverbindung verwendet ist.

10. Füllmasse nach einem der vorhergehenden Ansprüche, **dadurch gekennzeichnet**, daß eine mindestens eine Vinylgruppe aufweisende Silanverbindung verwendet ist.

11. Füllmasse nach einem der vorhergehenden Ansprüche, **dadurch gekennzeichnet**, daß eine mindestens eine Epoxygruppe aufweisende Silanverbindung verwendet ist.

12. Füllmasse nach Anspruch 11, **dadurch gekennzeichnet**, daß als zusätzlicher Ausgangsstoff ein monomeres Diol, insbesondere Äthylenglykol, verwendet ist.

13. Füllmasse nach Anspruch 12, **dadurch gekennzeichnet**, daß zwischen 1 und 10 Gewichtsprozent, vorzugsweise 3 Gewichtsprozent der Ausgangsstoff aus Diol bestehen.

14. Füllmasse nach einem der vorhergehenden Ansprüche, **dadurch gekennzeichnet**, daß ein mittelmolekulares Polyglykol insbesondere mit einem Molgewicht zwischen 2000 und 3500, verwendet ist.

15. Füllmasse nach einem der vorhergehenden Ansprüche, **dadurch gekennzeichnet**, daß Polypropylenglykol verwendet ist.

16. Füllmasse nach einem der Ansprüche 1 bis 13, **dadurch gekennzeichnet**, daß als Polyolefin Polybuten verwendet ist.

**Claims**

1. A filling compound for light waveguide leads (lead filling compound) or light waveguide cables (cable filling compound) produced by chemical reaction of the following starting substances: between 63 and 99 percent by weight of polyglycol and/or liquid polyolefin, between 27 and 0.5 percent by weight of finely divided silicon dioxide as filler and between 10 and 0.5 percent by weight of a multifunctional silane compound of the formula:

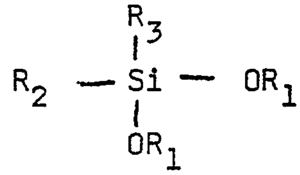

wherein $R_1$ denotes an alkyl group having 1 to 3 carbon atoms, $R_2$ denotes an alkyl group having 1 to 3 carbon atoms or the group-$OR_1$, and $R_3$ denotes a vinyl or epoxy group or an alkyl group having 2 to 4 carbon atoms and substituted with mercapto, methaenyloxy, cyano, amino or carboxyl groups.

2. Filling compound according to Claim 1, characterized in that, for the use as core filling compound (FCS), between 78 and 95.5 percent by weight, preferably between 90 and 94.5 percent by weight, of polyglycol and/or polyolefin are provided, in that between 20 and 4 percent by weight, preferably between 9 and 5 percent by weight, of silicon dioxide are provided as filler, and in that 2 to 0.5 percent by weight, preferably 1 to 0.5 percent by weight, of silane are provided.

3. Filling compound according to Claim 1, characterized in that, for the use as lead filling compound (FC), between 94 and 99 percent by weight, preferably between 96 and 98 percent by weight, of polyglycol and/or polyolefin are provided, in that between 4 and 0.5 percent by weight, preferably between 3 and 1.5 percent by weight, of silicon dioxide are provided as filler, and in that 2 to 0.5 percent by weight, preferably 1 to 0.5 percent by weight, of silane are provided.

4. Filling compound according to one of the preceding claims, characterized in that a polyurethane acrylate is used as the coating (CT) of the light waveguide (LW).

5. Filling compound according to one of the preceding claims, characterized in that a silicon dioxide rendered hydrophobic is used as a portion of the silicon dioxide.

6. Filling compound according to one of the preceding claims, characterized in that the filling compound comprises additions of antioxidants, in particular between 0.1 and 1 percent by weight of the actual filling compound.

7. Filling compound according to one of the preceding claims, characterized in that the size of the agglomerates of the finely distributed silicon dioxide is chosen as less than 10 µm.

8. Filling compound according to one of the preceding claims, characterized in that a silane compound comprising at least one alkyl group is used.

9. Filling compound according to one of the preceding claims, characterized in that a silane compound comprising at least one alkoxy group is used.

10. Filling compound according to one of the preceding claims, characterized in that a silane compound comprising at least one vinyl group is used.

11. Filling compound according to one of the preceding claims, characterized in that a silane compound comprising at least one epoxy group is used.

12. Filling compound according to Claim 11, characterized in that a monomeric diol, in particular ethylene glycol, is used as additional starting substance.

13. Filling compound according to Claim 12, characterized in that between 1 and 10 percent by weight, preferably 3 percent by weight, of the starting substances are composed of diol.

14. Filling compound according to one of the preceding claims, characterized in that a medium-molecular-weight polyglycol, in particular having a molecular weight between 2000 and 3500, is used.

15. Filling compound according to one of the preceding claims, characterized in that polypropylene glycol is used.

16. Filling compound according to one of Claims 1 to 13, characterized in that polybutene is used as polyolefin.

## Revendications

1. Masse de remplissage pour des conducteurs formant guides d'ondes optiques (masse de remplissage pour les conducteurs) ou pour des câbles formant guides d'ondes optiques (masse de remplissage pour l'âme), fabriquée au moyen d'une réaction chimique entre les substances de départ suivantes: entre 63 et 99 pour cent en poids de polyglycol et/ou d'une polyoléfine liquide, entre 27 et 0,5 pour cent en poids de bioxyde de silicium finement divisé, en tant que matière de remplissage, et entre 10 et 0,5 pour cent en poids d'un composé multifonctionnel du silane, répondant à la formule :

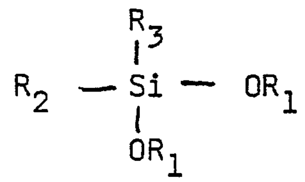

$R_1$ désignant un groupe alkyle comportant 1 à 3 atomes de carbone, $R_2$ un groupe alkyle comportant 1 à 3 atomes de carbone ou le groupe $-OR_1$, et $R_3$ un groupe vinyle ou époxy ou un groupe alkyle substitué par des groupes marcapto, méthaényloxy, cyano, amino ou carboxy et comportant 2 à 4 atomes de carbone.

2. Masse de remplissage suivant la revendication 1, caractérisée par le fait que pour son utilisation en tant que masse de remplissage pour l'âme (FCS), il est prévu entre 78 et 95,5 pour cent en poids, de préférence entre 90 et 94,5 pour cent en poids de polyglycol et/ou de polyoléfine, et qu'il est prévu, comme matière de remplissage, entre 20 et 4 pour cent en poids, de préférence entre 9 et 5 pour cent en poids de bioxyde de silicium, et qu'il est prévu 2 à 0,5 pour cent en poids, de préférence 1 a 0,5 pour cent en poids de silane.

3. Masse de remplissage suivant la revendication 1, caractérisée par le fait que, pour son utilisation comme masse de remplissage les pour conducteurs (FC), il est prévu entre 94 et 99 pour cent en poids, de préférence entre 96 et 98 pour cent en poids de polyglycol et/ou de polyoléfine, qu'il est prévu, comme matière de remplissage, entre 4 et 0,5 pour cent en poids, de préférence entre 3 et 1,5 pour cent en poids de bioxyde de silicium, et qu'il est prévu 2 à 0,5 pour cent en poids et de préférence 1 à 0,5 pour cent en poids de silane.

4. Masse de remplissage suivant l'une des revendications précédentes, caractérisée par le fait qu'on utilise comme revêtement (CT) du guide d'ondes optiques (LW), un acrylate de polyuréthane.

5. Masse de remplissage suivant l'une des revendications précédentes, caractérisée par le fait qu'on utilise, en tant que partie du bioxyde de silicium, du bioxyde de silicium rendu hydrophobe.

6. Masse de remplissage suivant l'une des revendications précédentes, caractérisée par le fait que la masse de remplissage contient des additifs formés par des antioxydants, constituant notamment entre 0,1 et 1 pour cent en poids de la masse de remplissage proprement dite.

7. Masse de remplissage suivant l'une des revendications précédentes, caractérisée par le fait que la taille des agglomérats du bioxide de silicium finement divisé est choisie inférieure à 10 μm.

8. Masse de remplissage suivant l'une des revendications précédentes, caractérisée par le fait qu'on utilise un composé du silane possédant au moins un groupe alkyle.

9. Masse de remplissage suivant l'une des revendications précédentes, caractérisée par le fait qu'on utilise un composé du silane contenant au moins le groupe alkoxy.

10. Masse de remplissage suivant l'une des revendications précédentes, caractérisée par le fait qu'on utilise un composé du silane contenant au moins un groupe vinyle.

11. Masse de remplissage suivant l'une des revendications précédentes, caractérisée par le fait qu'on utilise un composé du silane contenant au moins un groupe époxy.

12. Masse de remplissage suivant la revendication 11, caractérisée par le fait qu'on utilise, comme substance de départ supplémentaire, un diol monomère, notamment de l'éthylèneglycol.

13. Masse de remplissage suivant la revendication 12, caractérisée par le fait qu'entre 1 et 10 pour cent en poids et de préférence 3 pour cent en poids des substances de départ sont constitués par le diol.

14. Masse de remplissage suivant l'une des revendications précédentes, caractérisée par le fait qu'on utilise un polyglycol de poids moléculaire moyen, possédant notamment un poids moléculaire compris entre 2000 et 3500.

15. Masse de remplissage suivant l'une des revendications précédentes, caractérisée par le fait qu'on utilise du polypropylèneglycol.

16. Masse de remplissage suivant l'une des revendications 1 à 13, caractérisée par le fait qu'on utilise, comme polyoléfine, du polybutène.

FIG 1

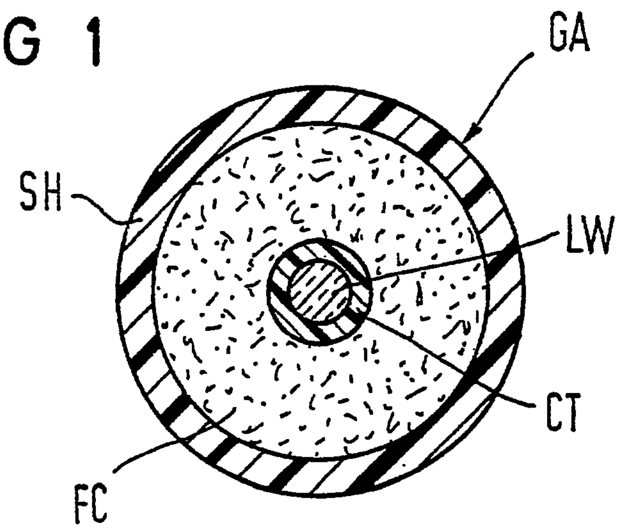
GA
SH
LW
CT
FC

FIG 2

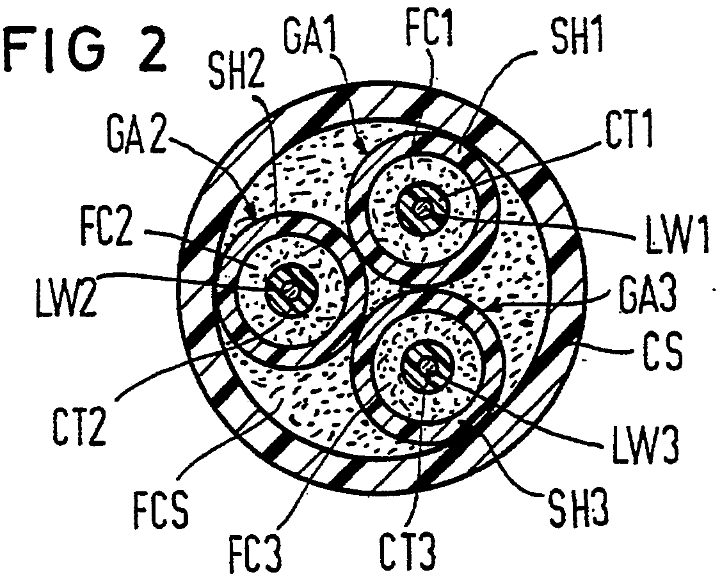
SH2
GA1
FC1
SH1
GA2
CT1
FC2
LW1
LW2
GA3
CS
CT2
LW3
FCS
FC3
CT3
SH3